# EUROPÄISCHE PATENTSCHRIFT

(11) **EP 1 598 754 B1**
(45) Veröffentlichungstag und Bekanntmachung des Hinweises auf die Patenterteilung: **20.09.2017**
(21) Anmeldenummer: 05009816.9
(22) Anmeldetag: 04.05.2005
(51) Int. Cl.: G06F 17/30, H04L 29/08

(54) **Verfahren und System zur Informationsausgabe an einer Kommunikationsendvorrichtung sowie ein Portal**
Method and system for information output at a communication terminal as well as a portal
Méthode et système pour l'affichage d'informations sur un terminal de communication ainsi qu'un portail

(30) Priorität: 05.05.2004 DE 102004022187
(43) Veröffentlichungstag der Anmeldung: 23.11.2005
(73) Patentinhaber: Vodafone GmbH, 40549 Düsseldorf (DE)
(72) Erfinder: Hauschulz, Margrit Dipl.-Volksw., 40764 Langenfeld (DE); Gaida, Klemens Dr.-Ing., 46519 Alpen (DE)
(74) Vertreter: Müller, Thomas

(56) Entgegenhaltungen:
- WO-A-01/90952
- WO-A-01/96994
- WO-A-02/091154
- US-A- 6 069 625
- US-B1- 6 489 968
- US-B1- 6 681 247
- WILL R ET AL: "WebSphere Portal: Unified user access to content, applications and services" IBM SYSTEMS JOURNAL, IBM CORP. ARMONK, NEW YORK, US, 26. April 2004 (2004-04-26), Seiten 420-429, XP002356355 ISSN: 0018-8670
- MANDATO D ET AL: "CAMP: a context-aware mobile portal" SERVICE PORTABILITY AND VIRTUAL CUSTOMER ENVIRONMENTS, 2000 IEEE SAN FRANCISCO, CA, USA 1 DEC. 2000, PISCATAWAY, NJ, USA,IEEE, US, 2001, Seiten 52-61, XP010551463 ISBN: 0-7803-7133-X

## Beschreibung

Die vorliegende Erfindung bezieht sich auf ein Verfahren und ein System zur Ausgabe von mindestens einer Information an einer Kommunikationsendvorrichtung sowie auf ein Portal.

Durch die Vernetzung von Rechnern, wie beispielsweise durch das Internet oder auch Intranets steht eine unüberschaubare Menge von Informationen zur Verfügung. Um den Benutzer des Netzwerkes bei dem Auffinden von Informationen oder Dienstleistungen unterstützen zu können, sind sogenannte Portale entwickelt worden. Diese Portale weisen in der Regel eine hierarchische Datenstruktur auf. In höheren Ebenen der Hierarchie werden hierbei Oberbegriffe beziehungsweise Sammelbegriffe angegeben, die wiederum mit speziellen Informationen, Dienstleistungen oder weiteren Oberbegriffen verbunden sind, wobei diese speziellen Informationen, Dienstleistungen oder weiteren Obergriffe auf niedrigeren Ebenen in der Hierarchie angeordnet sind. Dieser Aufbau von Portalen bietet sich an, da an Ausgabegeräten beziehungsweise Anzeigegeräten der zur Verfügung stehende Anzeigeraum begrenzt ist. In den einzelnen Hierarchieebenen kann eine ausreichende Anzahl von Informationen angezeigt werden, die dann mit entsprechenden Informationen niedrigerer Hierarchieebenen verbunden sind. Weiterhin kann durch die relativ geringe Anzahl angezeigter Informationen sichergestellt werden, dass der Benutzer sich auf die angezeigten Informationen konzentrieren kann beziehungsweise diese würdigen kann.

Der Nachteil eines solchen Portals liegt aber insbesondere darin, dass Informationen, die für den Benutzer von Interesse sein können, gegebenenfalls in einer der unteren hierarchischen Ebene abgelegt sind, auf die der Benutzer aufgrund des Oberbegriffs, mit der die Informationen in der darüber liegenden Ebene gekennzeichnet sind, nicht zugreifen wird. Darüber hinaus kann insbesondere bei Hierarchien mit einer großen Anzahl von Hierarchieebenen selbst bei gezieltem Abarbeiten von Hierarchieebenen ein gewünschtes Ergebnis gegebenenfalls erst nach längerer Suche gefunden werden.

WO 01/90952 A beschreibt ein Verfahren und ein System zur Schaffung nutzerspezifischer Webseiten. Hierbei werden entsprechend dem Benutzerverhalten Änderungen in dem Aufbau der Webseite vorgenommen. Hierbei wird auf das tatsächliche Verhalten des aktuellen Benutzers im Vergleich zu dem Aufbau der Webseite abgestellt und bei einer Abweichung des Benutzerverhaltens von dem Aufbau der Website der Aufbau angepasst. Weiterhin ist in der WO 01/96994 A eine Benutzerschnittstelle beschrieben, bei der sich die Menüoptionen-Ordnung nach dem Benutzerverhalten ändert. Auch bei dieser Benutzerschnittstelle ist die Änderung der Menüoptionen-Ordnung abhängig von den Aktionen des Benutzers bezüglich der Menüoptionen. Ein Nachteil dieser bekannten Verfahren liegt darin, dass zwar Informationen, die der Benutzer auf aufwändige Weise ermitteln musste, bei einem erneuten Aufrufen der entsprechenden Seite an einem besseren Platz angezeigt werden können, neue Informationen können aber bei diesen Verfahren nicht berücksichtigt werden.

Weiterhin sind in der US 6,489,968 B1 ein System und ein Verfahren beschrieben, mittels derer beliebte Kategorien einer Browser-Menüstruktur angezeigt werden können. Hierbei wird in der Regel auf das Benutzerverhalten abgestellt und häufig verwendete Menüpunkte werden dem Benutzer auf einer höheren Menüebene angezeigt. Hierbei ist nachteilig, dass die tatsächlichen Präferenzen des Benutzers nicht berücksichtigt werden können.

In dem Aufsatz "Camp: a context-aware mobile portal" von Mandato D. et al., Service poratbility and virtual customer environments, 2000 IEEE San Francisco, CA, USA, 1. Dezember 2001, Seiten 52-61, (XP010551463, ISBN: 0-7803-7133-X) wird ein Portal beschrieben, das Zusammenhänge berücksichtigt. Die hierbei berücksichtigten Zusammenhänge betreffen die Informationen, die die Situation des Nutzers beschreiben. So werden beispielsweise Wetterbedingungen oder die Tageszeit berücksichtigt.

Schließlich offenbart WO 02/091154 A eine intelligente Internet Webseite mit hierarchischem Menü. Hierbei wird eine Menüstruktur automatisch modifiziert. Die Modifikation kann unter Berücksichtigung von Affinitätsvorschlägen erfolgen, die aufgrund des Benutzerverhaltens von Internet-Benutzern ermittelt werden. Ein Nachteil dieser Webseite besteht darin, dass die Modifikation nur durch ein verändertes Verhalten anderer Benutzer geändert wird und eine gegebenenfalls gemachte Modifikation entsprechend nur aufgrund des Verhaltens der anderen Internet-Benutzer rückgängig gemacht wird. Alternativ muss der Benutzer die Website manuell modifizieren.

Der vorliegenden Erfindung liegt somit die Aufgabe zugrunde, ein Verfahren und eine System zur Ausgabe von Informationen zu schaffen, die einem Benutzer auf einfache Weise und ohne zusätzlichen Bedarf an Anzeigeplatz die für ihn relevanten Informationen zur Verfügung stellen können. Weiterhin sollen bei der vorliegenden Erfindung die erforderlichen Aktionen, die durch den Benutzer ausgeführt werden müssen, auf ein Minimum reduziert werden können.

Die vorliegende Erfindung wird daher gelöst durch ein Verfahren gemäß Patentanspruch 1 und ein System gemäß Patentanspruch 12. Gemäß einem ersten Aspekt wird die Aufgabe gelöst durch ein Verfahren zur Ausgabe von mindestens einer Information an einer Kommunikationsendvorrichtung, wobei die Information einen Teil einer Datenstruktur darstellt. Das Verfahren zeichnet sich dadurch aus, dass in Abhängigkeit von mindestens einer Aktion des Benutzers der Kommunikationsendvorrichtung bezüglich einer ersten Information eine Assoziation zwischen dieser ersten Information und mindestens einer weiteren Information der Datenstruktur erzeugt wird, die unabhängig von einer vorhergegangenen Aktion des Benutzers bezüglich der weiteren Information ist, und aufgrund der Assoziation die Datenstruktur geändert wird, wobei die Assoziation aufgehoben wird, wenn die weitere Information über eine vorgegebene Zeit nicht aktiviert wurde.

Durch dieses Verfahren kann eine Individualisierung der Informationsausgabe auf einfache Weise erfolgen. Es wird insbesondere möglich ein, vorzugsweise computerimplementiertes, Verfahren zur Erzeugung eines anwenderbezogenen, personalisierten Informationsangebotes zu schaffen. Besonders vorteilhaft ist es, dass die Datenstruktur sich aufgrund der Aktion des Benutzers bezüglich einer ersten Information, die Teil der Datenstruktur ist, ändert. Als erste Information wird im Folgenden stets die Information bezeichnet, die von dem Benutzer ausgewählt wurde. Bei herkömmlichen Portalen wird teilweise ein sogenanntes Benutzerprofil verwendet, das von dem Benutzer eingerichtet werden muss. Bei diesen Benutzerprofilen ist es daher notwendig, dass der Benutzer Angaben macht, die dann für die Auswahl von Informationen oder für den Aufbau der Datenstruktur verwendet werden. Dieses Einrichten eines Benutzerprofils bedeutet aber für den Benutzer einen zusätzlichen Arbeitsschritt und ist darüber hinaus statisch. Bei dem erfindungsgemäßen Verfahren hingegen erfolgt eine Veränderung der Datenstruktur aufgrund einer Aktion, die der Benutzer bezüglich einer Information ausgeführt hat. Da er diese Aktion, insbesondere das Auswählen der Information, ohnehin ausführt, wenn die Information für ihn von Interesse ist, ist somit ein gesonderter Arbeitsschritt des Benutzers nicht zwingend notwendig. Es liegt aber auch im Rahmen der Erfindung zusätzlich zu der erfindungsgemäßen Assoziation ein Benutzerprofil zur Verfügung zu stellen, das von dem Benutzer eingerichtet werden kann. Ein solches Benutzerprofil ist aber nicht zwingend notwendig.

Bei dem erfindungsgemäßen Verfahren erfolgt eine Assoziierung einer weiteren Information mit einer ersten Information, die unabhängig von einer vorhergegangenen Aktion des Benutzers bezüglich der weiteren Information ist. Somit ist weder eine vorherige Auswahl der weiteren Information durch den Benutzer noch eine Angabe des Benutzers, dass diese weitere Information angezeigt werden soll, notwendig. Der Vorteil dieser von der Aktion des Benutzers bezüglich der weiteren Information unabhängigen Assoziation liegt darin, dass zum einen neue Informationen mit der ersten Information assoziiert werden und zur Anzeige gebracht werden können und zum anderen Kriterien, wie beispielsweise das Nutzerverhalten anderer Nutzer bei der Assoziation berücksichtigt werden können. Auf diese Weise wird das Verfahren flexibler und für den Benutzer einfacher zu handhaben.

Als Assoziation wird im Sinne dieser Erfindung insbesondere ein miteinander in Verbindung bringen von Informationen verstanden, zwischen denen nach der Datenstruktur keine Verbindung bestand.

Das in Verbindung bringen kann insbesondere aufgrund mindestens eines Merkmals der ersten Information erfolgen. Bevorzugt wird diese erste Information mit einer weiteren Information in Verbindung gebracht, die ebenfalls dieses Merkmal aufweist. Als Merkmale können inhaltliche Oberbegriffe verwendet werden, denen die Information zugeordnet werden können und die sich somit von den Oberbegriffen, nach denen die Datenstruktur aufgebaut ist, unterscheiden können. Weiterhin kann als Merkmal der Eintrag der ersten Information in einer Nutzerdatenbank verwendet werden. Ist die erste Information in einer Nutzerdatenbank hinterlegt, so können die in dieser Datenbank hinterlegten weiteren Informationen, die von anderen Nutzern in Zusammenhang mit der ersten Information genutzt wurden, als weitere Information verwendet werden, die mit der ersten Information assoziiert werden.

Die Merkmale, die für die Assoziation verwendet werden, können zentral hinterlegt und verwaltet werden. Insbesondere können die Merkmale von einem Betreiber der Datenbankstruktur festgelegt und verwaltet werden.

Eine Art der Assoziation kann wie folgt erfolgen. Die erste Information ist in der Regel in einer Datenstruktur unter einem Oberbegriff mit anderen Informationen zusammengefasst. Aus der Menge dieser Informationen kann erfindungsgemäß nun eine Teilmenge oder Schnittmenge nach vorgegebenen Merkmalen ermittelt werden.

Die mindestens eine weitere Information, die mit der ersten Information assoziiert wird, st ellt dann einen Teil dieser Schnitt- oder Teilmenge dar. Die Informationen, die Teil dieser Teilmenge oder Schnittmenge sind, können dann durch die Änderung der Datenstruktur, die aufgrund der Assoziation erfolgt, in der Datenstruktur mit dem der ersten Information zugeordneten Oberbegriff verbunden werden, das heißt diesem untergeordnet werden. Somit kann durch die erfindungsgemäße Assoziation die Möglichkeit des Zugriffs auf eine weitere Information oder Verbindung mit einer weiteren Information geschaffen werden, die in der ursprünglichen Datenstruktur weder mit der ersten Information noch mit dem Obergriff der ersten Information verbunden war.

Als Informationen, die Teile der Datenstruktur darstellen und an der Kommunikationsendvorrichtung ausgegeben werden, können im Sinne dieser Erfindung insbesondere Dateien, Bilder, Schriftzüge, Datensätze, Programme und/oder so genannte Links verwendet werden. Insbesondere beziehen sich die Informationen auf Dienste, beispielsweise Dienste eines Mobilfunkbetreibers. Dies können Informationsdienste oder Dienste bezüglich Spielen, Klingeltönen und der gleichen sein. Mit dem erfindungsgemäßen Verfahren kann somit ein personalisiertes Service-Angebot geschaffen werden. Sind die Informationen Links, so können diese jeweils mit weiteren Informationen der Datenstruktur in der Weise verbunden sein, dass beim Auswählen einer ersten Information automatisch weitere Informationen, die in der Datenstruktur dieser Information zugeordnet, insbesondere in der Hierarchie damit verbunden sind, ausgegeben werden. Die Informationen, die an der Kommunikationsendvorrichtung ausgegeben werden, sind zumindest teilweise in einer oder mehreren Datenbanken abgelegt, die mit der Datenstruktur, in die die Informationen eingeteilt sind, verbunden sind.

Beim Auswählen einer Information, die ein Programm oder einen Datensatz darstellt, durch den Benutzer, kann in diesem Fall beispielsweise auf den Datensatz oder das Programm zugegriffen werden, dieser beziehungsweise dieses auf die Kommunikationsendvorrichtung oder einen damit verbundenen Server herunter geladen werden oder das Programm auf der Kommunikationsendvorrichtung oder beispielsweise einem damit verbundenen Server initialisiert werden. Handelt es sich bei der assoziierten Information um einen Datensatz oder ein Programm, so kann die Veränderung der Datenstruktur darin bestehen, dass zu diesem Datensatz oder Programm an der gewünschten Position in der Datenstruktur ein Link gesetzt wird. Erfindungsgemäß erfolgt die Assoziation zwischen der ersten und mindestens einer weiteren Information automatisch. Auf diese Weise ist es nicht erforderlich, dass der Benutzer gewisse Präferenzen oder Interessensgebiete angibt. Vielmehr kann durch die Aktivierung einer ersten Information von einem Programm automatisch eine Verbindung zu weiteren Informationen erstellt werden. Diese Assoziation kann anhand von Oberbegriffen erfolgen, unter die sich die erste und die weitere Information zusammenfassen lassen. Diese Oberbegriffe können von denen abweichen, anhand derer die Datenstruktur aufgebaut ist. Die Assoziation kann weiterhin aufgrund von Angaben erfolgen, die von Systemen ausgegeben werden, in denen Kundendaten beziehungsweise Nutzerdaten analysiert werden. Solche Systeme sind beispielsweise so genannte Customer-Relationship-Management Systeme (CRM-Systeme). In solchen Systemen können Informationen in Nutzerdatenbanken so abgelegt sein, dass sich aus diesen Datenbanken ergibt, welche Informationen von Benutzern verwendet werden, die auch andere Informationen verwendet haben.

Die Ausgabe der Informationen, die durch das erfindungsgemäße Verfahren ermöglicht wird, kann eine optische Anzeige oder eine akustische Ausgabe sein. Vorzugsweise handelt es sich um eine optische Anzeige, die auf einem Display oder einer anderen Anzeigevorrichtung des Kommunikationsendvorrichtung dargestellt wird. Die Aktivität, die der Benutzer bezüglich einer oder mehrere der Aktivitäten vornehmen kann und aufgrund derer die erfindungsgemäße Assoziation erzeugt wird, ist vorzugsweise ein Auswählen einer ausgegebenen Information. Werden die Informationen beispielsweise auf einem Display angezeigt, so kann das Auswählen über Betätigung einer Navigationsvorrichtung erfolgen, mittels derer der Benutzer zwischen einzelnen angezeigten Informationen wechseln oder auch mehrere gleichzeitig auswählen kann. Wird eine Information ausgewählt, so werden dadurch entweder mit dieser Information verbundene weitere Informationen, insbesondere Informationen, die auf einer unteren Hierarchieebene angeordnet sind, angezeigt oder es wird ein mit der ausgewählten Information verbundenes Programm gestartet. Ein solches Programm kann beispielsweise ein Programm zum Abspielen einer Melodie, eines Filmes oder ein Programm zum Ausführen eines Spiels sein.

Die Datenstruktur, deren Information zumindest teilweise durch das erfindungsgemäße Verfahren ausgegeben werden soll, umfasst mindestens zwei Informationen und weist vorzugsweise einen hierarchischen Aufbau auf. An der Kommunikationsendvorrichtung wird in der Regel ein Teil einer Hierarchieebene oder die gesamte Hierarchieebene angezeigt. Wird nur ein Teil der Hierarchieebene angezeigt, so handelt es sich in der Regel um die Informationen, die mit der ausgewählten Information der höheren Hierarchieebene in der Datenstruktur verbunden sind.

Die Assoziation, die erfindungsgemäß erfolgt, kann aufgrund von Oberbegriffen erfolgen, unter denen die Informationen, die assoziiert werden zusammengefasst werden können. Im Vergleich zu der in der Datenstruktur bereits vorgegebenen Verknüpfung von Informationen unter einer übergeordneten Information ist die erfindungsgemäße Assoziation variabel. Wird beispielsweise von einem Benutzer eine Information ausgewählt, die das Thema Sport-News betrifft und in der Datenstruktur dem Oberbegriff "News" zugeordnet ist, so kann erfindungsgemäß mit dieser Information auch eine Information, die sich auf "Sport" bezieht aber nicht unbedingt der Kategorie "News" zuzurechnen ist, assoziiert werden. Die Information, die durch den Benutzer ausgewählt wird, kann beispielsweise Wetternachrichten betreffen. In diesem Fall kann die assoziierte Information der Link zur Bestellung von SMS- oder MMS-Nachrichten über die Wettervorhersage sein. Weiterhin kann, wenn die ausgewählte Information beispielsweise ein Programm darstellt, die assoziierte Nachricht ein Link zu einem Update für dieses Programm sein. Weitere Beispiele der Assoziation sind die Verbindung einer Information bezüglich eines Rennsports mit Informationen zur Formel 1, die Verbindung einer Information bezüglich Börsendaten mit Wirtschaftsnachrichten, die Verbindung einer Information bezüglich eines Stadtführers mit anderen so genannte "Location based services". Dadurch wird die Ausgabe von Informationen sehr flexibel und kann an die Bedürfnisse des Benutzers, die auch wiederum variieren, angepasst werden.

Vorzugsweise wird bei dem erfindungsgemäßen Verfahren die Datenstruktur so geändert, dass die Information, die mit der ersten Information assoziiert wurde, aufgrund der Assoziation in die Hierarchieebene der ersten Information gebracht wird. Auf diese Weise wird es möglich, dem Benutzer eine mit der von ihm aktivierten beziehungsweise ausgewählten Information assoziierte Information gleichzeitig, das heißt in der selben Hierarchieebene, anzuzeigen. Dem Benutzer können somit Informationen zur Kenntnis gebracht werden, ohne, dass dieser die Informationen speziell anfordern muss. Da die dem Benutzer ohne Anforderung zur Kenntnis gebrachte Information aufgrund einer Assoziation mit einer Information, die zuvor von dem Benutzer ausgewählt wurde, angegeben wird, kann die Wahrscheinlichkeit erhöht werden, dass der Benutzer an dieser neuen Information Interesse hat. Dadurch kann eine Belästigung vermieden werden, die in der Regel durch Werbungen erfolgt, die wahllos auf Ausgabevorrichtungen zusammen mit angeforderten Informationen ausgegeben werden. Die assoziierte Information wird vorzugsweise in der Position in der Hierarchieebene der ersten Information in der Datenstruktur angeordnet, in der sicher gestellt werden kann, dass diese zusammen mit der ersten Information angezeigt wird. Enthält die Hierarchieebene eine so große Anzahl von Informationen, dass diese nicht gleichzeitig auf der Kommunikationseinvorrichtung angezeigt werden können, so wird die assoziierte Information in dieser Ebene vorzugsweise so positioniert, dass diese mit der ersten Information zusammen einer einzigen Information der nächst höheren Informationsebene zugeordnet ist, das heißt zusammen mit dieser ersten Information ausgegeben wird.

Alternativ ist es aber auch möglich, dass durch die Assoziation die Position der assoziierten Information innerhalb einer Hierarchieebene verändert wird. Diese Art der Positionierung einer Information kann auch in einer Datenstruktur verwendet werden, die nur eine einzige Ebene aufweist, das heißt keinen hierarchischen Aufbau besitzt. Diese Ausführungsform kann aber auch bei hierarchisch aufgebauten Datenstrukturen von besonderer Bedeutung sein, wenn nämlich in einer Hierarchieebene eine große Anzahl von Informationen enthalten ist. Eine mit einer ersten Information assoziierte weitere Information kann dann in unmittelbare Nähe der ersten Information gebracht und an dieser Position angezeigt werden. Werden mehrere Informationen angezeigt, so kann die assoziierte Information beispielsweise vom unteren Rand eines Displays nach oben, insbesondere neben oder unter die erste Information verschoben werden. Bei dieser Ausgestaltung besteht die Änderung der Datenstruktur darin, dass die Positionszuweisung auf dem Ausgabegerät, die in der Datenstruktur den einzelnen Informationen zugeordnet ist, geändert wird.

Erfindungsgemäß ist es auch möglich eine neue Information zu schaffen, unter der assoziierte Informationen zusammengefasst sind. Die neue Information kann beispielsweise den Titel "Neuigkeiten für Sie" tragen und als Link zu der Auflistung von Informationen dienen, die aufgrund der erfindungsgemäßen Assoziation mit ersten vom Benutzer ausgewählten Informationen assoziiert wurden. In diesem Fall erfolgt die Ausgabe der assoziierten Information nicht in unmittelbarer räumlicher Nähe zu der ersten ausgewählten Information. Bei optischer Ausgabe kann beim Auswählen dieser neuen Information beispielsweise eine separate Seite geöffnet werden. Auf dieser Seite werden dann die assoziierten Informationen, insbesondere in Form von Links angezeigt.

Zusätzlich zu der Assoziation durch die Aktion des Benutzers wird die Assoziation in Abhängigkeit der Zeit erzeugt. Eine solche zeitliche Abhängigkeit der Assoziation kann verwendet werden, um unterschiedlichen Benutzerverhalten zu unterschiedlichen Zeiten Rechnung tragen zu können. So wird beispielsweise für Wochenenden eine andere Assoziation als für Werktage hilfreich sein. An den Wochenenden können beispielsweise eher Informationen, die einen Freizeitcharakter aufweisen und mit der ersten Information assoziiert werden können, für die erfindungsgemäße Assoziation verwendet werden. Werden beispielsweise Dienste als Informationen angeboten, so kann an den Wochenenden bei der Auswahl eines Informationsdienstes für Mietwagen in einer bestimmten Stadt, das Angebot für Freizeitaktivitäten in dieser Stadt mit der ersten Information assoziiert werden. Während der Woche hingegen könnte bei diesem Beispiel als assoziierte Information das Angebot für Taxizentralen in dieser Stadt angezeigt werden. Zudem kann eine zeitliche Assoziation auch mit anderen benutzerspezifischen Handlungen, die der Benutzer in der Vergangenheit bezüglich Informationen der Datenstruktur ausgeführt hat, verbunden werden, so kann eine Information zu Blumengeschäften am Muttertag angezeigt werden, wenn am Valentinstag Informationen zu Blumengeschäften von dem Benutzer verwendet wurden.

Erfindungsgemäß wird die Assoziation lediglich für eine begrenzte Zeit aufrechterhalten. Diese begrenzte Zeit kann vom Benutzer eingestellt werden oder aufgrund von Aktionen des Benutzers bestimmt werden.

Wird eine mit der ersten Information assoziierte weitere Information über einen gewissen Zeitraum von dem Benutzer nicht aktiviert, so kann davon ausgegangen werden, dass diese weitere Information für den Benutzer nicht von Interesse ist. Die Assoziation, die zwischen diesen Informationen hergestellt wurde, wird daher aufgehoben und die Änderung der Datenstruktur rückgängig gemacht werden.

Zusätzlich kann die Assoziation durch eine Aktion des Benutzers selber aufgehoben werden. Auf diese Weise kann der Benutzer zusätzlich auf die personalisierte Datenstruktur Einfluss nehmen.

Die Aktion des Benutzers bezüglich einer Information kann vorzugsweise die Bearbeitung der Information darstellen. Die Art der Bearbeitung ist hierbei insbesondere abhängig von der Kommunikationsendvorrichtung. Vorzugsweise stellt das Bearbeiten der Information ein Auswählen, insbesondere ein Auswählen zur Anzeige dieser Information oder damit verbundener Informationen, dar.

Die Kommunikationsendvorrichtung stellt vorzugsweise ein mobiles Endgerät dar, kann aber auch ein festes Endgerät sein. Als mobile Endgeräte kommen beispielsweise Laptops, Mobiltelefone oder sogenannte PDA's in Betracht. Feste Endgeräte können beispielsweise PC's sein. Diese Endgeräte können mit den Datenbanken, auf die die Datenstruktur zumindest teilweise zugreift, fest vernetzt oder aber in mobiler Kommunikationsverbindung stehen. Mobiltelefone können hierfür mit geeigneten Browser wie WAP- oder HTML-Browsern ausgestattet sein, wodurch ein Zugriff auf Informationen, die in Datenbanken des Internets oder eines Intranets abgelegt sind, ermöglicht wird. Bei mobilen Endgeräten lassen sich die Vorteile des erfindungsgemäßen Verfahrens besonders gut nutzen, da bei diesen Geräten zum einen der Platz zur Anzeige von Informationen sehr begrenzt ist, beispielsweise bei einem Display eines Mobiltelefons. Zum anderen ist es für den Benutzer eines solchen mobilen Endgerätes in der Regel umständlich spezielle Angaben über das mobile Endgerät einzugeben, beispielsweise die Eingabe von Buchstaben über die Tastatur eines Mobiltelefons. Somit ist für mobile Endgeräte der Vorteil, dass die Aktivitäten des Benutzers auf ein Minimum reduziert werden können von besonderer Bedeutung. Zudem bietet die vorliegende Erfindung bei der Nutzung an mobilen Endgeräten die Möglichkeit der Stimulierung der Nutzung mobiler Datendienste, indem Benutzern, das heißt Kunden, automatisch Dienste vorgeschlagen werden, die mit solchen Diensten assoziiert sind, die der Kunde bereits in bestimmten Umfang nutzt. Zudem werden bei einem mobilen Endgerät durch die Zeitersparnis, die durch schnelleres Auffinden gewünschter Informationen auftritt, die Kosten für den Benutzer gesenkt.

Vorzugsweise ist die Datenstruktur, deren Informationen mit dem vorliegenden erfindungsgemäßen Verfahren ausgegeben werden sollen, mit mindestens einer Datenbank verbunden. Es liegt selbstverständlich im Rahmen der Erfindung, die Datenstruktur mit einer Vielzahl von Datenbanken zu verbinden, auf die je nach Wunsch des Benutzers beziehungsweise aufgrund der erfindungsgemäßen Assoziation entsprechend zugegriffen wird. Die Kommunikationsendvorrichtung kann vorzugsweise mit einem Netzwerk verbunden sein. Dieses Netzwerk kann beispielsweise das Internet oder aber auch Intranets darstellen.

Vorzugsweise stellt die Datenstruktur, deren Informationen mit dem erfindungsgemäßen Verfahren ausgegeben werden, eine Portalstruktur dar. Diese kann sowohl Dienste als auch Informationsmaterial umfassen.

Gemäß einem weiteren Aspekt betrifft die vorliegende Erfindung ein System zur Ausgabe von mindestens einer Information, die in einer Datenstruktur enthalten ist, wobei das System zumindest eine Kommunikationsendvorrichtung zur Ausgabe von Informationen und für die Interaktion mit einem Benutzer der Kommunikationsendvorrichtung umfasst. Das System zeichnet sich dadurch aus, dass dieses zumindest ein Assoziationsmodul umfasst, das in Abhängigkeit von mindestens einer Aktion des Benutzers automatisch eine erste Information mit mindestens einer weiteren Information assoziiert, wobei die Assoziation unabhängig von einer vorhergegangenen Aktion des Benutzers bezüglich der weiteren Information ist und die Assoziation aufgehoben wird, wenn die weitere Information über eine vorgegebene Zeit nicht aktiviert wurde. Das Assoziationsmodul kann als gesonderte Einheit vorliegen. Vorzugsweise wird das Assoziationsmodul aber in der Einheit integriert sein, in der die Datenstruktur abgelegt ist. Diese Einheit kann in der Kommunikationsendvorrichtung oder in einer damit verbundenen Vorrichtung, wie beispielsweise einem Server vorgesehen sein. Das Assoziationsmodul kann ein Soft-Programm darstellen.

Das System ist vorzugsweise so ausgelegt, dass dieses zum Ausführen des erfindungsgemäßen Verfahrens verwendet werden kann. Insbesondere kann das Assoziationsmodul zur Veränderung der Datenstruktur ausgelegt sein. Die Erfindung kann in Form eines Portals implementiert werden, das eine Datenstruktur aufweist, die zumindest eine Information umfasst, wobei in der Datenstruktur mindestens eine erste Information mit mindestens einer weiteren Information zumindest zeitweise assoziiert ist und wobei die Assoziation aufgrund mindestens einer Aktion eines Benutzers des Portals bezüglich der ersten Information erfolgt ist, die Assoziation unabhängig von einer vorhergegangenen Aktion des Benutzers bezüglich der weiteren Information ist und die Assoziation aufgehoben wird, wenn die weitere Information über eine vorgegebene Zeit nicht aktiviert wurde. Durch das Portal wird vorzugsweise mindestens eine Information nach dem erfindungsgemäßen Verfahren ausgegeben. Das Portal, das die erfindungsgemäße Datenstruktur aufweist, kann beispielsweise als Dienste-Portal eines Mobilfunkbetreibers verwendet werden, in dem Informationen wie Nachrichten, Mail und MMS-Dienste, Download-Dienste, Spiele, Chat-Dienste, Reise-Dienste und dergleichen angeboten werden.

Die Merkmale und Vorteile, die bezüglich des Verfahrens beschrieben werden, gelten - soweit anwendbar - entsprechend für das erfindungsgemäße System beziehungsweise das beschriebene Portal und jeweils umgekehrt.

Die vorliegende Erfindung wird im Folgenden anhand der beiliegenden Figuren erneut beschrieben. Es zeigen:
- Figur 1:: einen schematischen Aufbau einer hierarchischen Datenstruktur;
- Figur 2:: den schematischen Aufbau einer geänderten Datenstruktur;
- Figur 3:: den schematischen Aufbau einer Datenstruktur mit Assoziation;
- Figur 4:: den schematischen Aufbau einer weiterhin geänderten Datenstruktur; und
- Figur 5:: den schematischen Aufbau einer Ausführungsform eines erfindungsgemäßen Systems

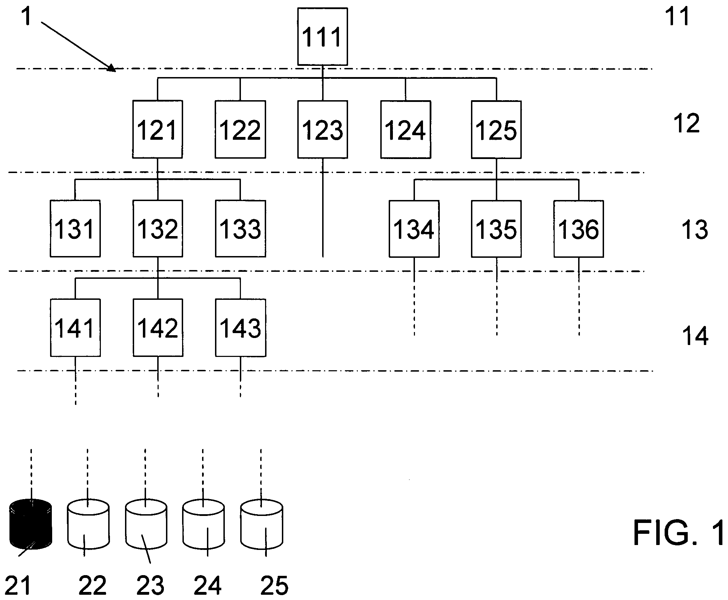

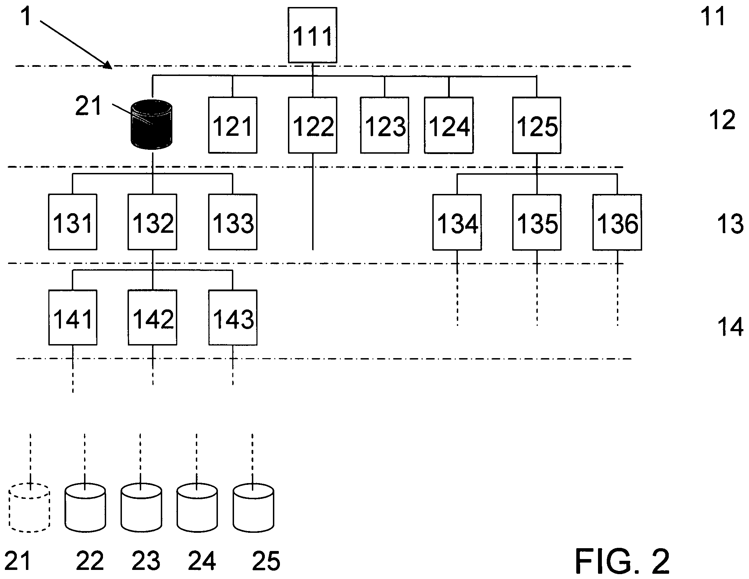

In den Figuren 1 bis 4 ist systematisch eine Datenstruktur 1 in den unterschiedlichen Stadien des erfindungsgemäßen Verfahrens wiedergegeben. Die Datenstruktur 1 weist einen hierarchischen Aufbau auf. In der dargestellten Ausführungsform ist in der oberen Hierarchieebene 11 eine Startseite 111 angedeutet. Von dieser Startseite 111 gelangt der Benutzer zu den Informationen der zweiten Hierarchieebene 12. Auf dieser Hierarchieebene 12 werden noch alle Informationen 121-125 der Ebene angezeigt. Wählt der Benutzer nun durch geeignete Mittel, zum Beispiel durch einen Cursor, die erste Information 121 der zweiten Hierarchieebene 12 aus, so wird ihm auf dem Display der Teil der dritten Hierarchieebene 13 angezeigt, der in der Datenstruktur 1 der ersten Information 121 der zweiten Hierarchieebene 12 zugeordnet ist. Diese Informationen 131 bis 133 können ausschließlich oder gegebenenfalls zusammen mit den anderen Informationen der zweiten Hierarchieebene 12 oder der dritten Hierarchieebene 13 angezeigt werden. Bei einer weiteren Auswahl einer der Informationen 131 bis 133 gelangt der Benutzer in die vierte Hierarchieebene 14 und so weiter. An einem gewissen Punkt in der Datenstruktur 1 wird die Information 121-125, 131-136 auf eine Datenbank 21-25 zugreifen und die von dem Benutzer gewünschten Informationen dieser Datenbank 21-25 entnehmen. In der Figur 1 ist die Datenbank 21, auf die von einer der Informationen einer Hierarchieebene zugegriffen wird, in grau gezeigt. Die Informationen, die in dieser Datenbank abgelegt sind und beispielsweise Daten, insbesondere Dienste darstellen können, können nun auf eine höhere Hierarchieebene gebracht werden. Dieses Verschieben in der Datenstruktur 1 dient dazu dem Benutzer Informationen, die er einmal angefragt hat, bei der nächsten Benutzung der Datenstruktur 1 leichter zugänglich zu machen. In der Figur 2 ist der Zustand gezeigt, in dem die vom Benutzer gewünschten Informationen bereits auf die zweite Hierarchieebene 12 verschoben wurden und er somit bei der nächsten Benutzung der Datenstruktur 1 unmittelbar nach der Startseite 111 auf diese Informationen zugreifen kann. In den Figuren ist die Verschiebung der Informationen der Datenbasis 21 durch die Wiedergabe des Datenbanksymbols in der zweiten Hierarchieebene 12 angedeutet. Es versteht sich aber, dass nicht die gesamte Datenbank 21 in diese Hierarchieebene 12 verschoben werden muss. Vielmehr wird der Zugriff auf die Daten der Datenbank 21 von der Hierarchieebene 21 aus, insbesondere durch Vorsehen eines entsprechenden Links in dieser Hierarchieebene ermöglicht. Ein entsprechender Link, der in der ursprünglichen Datenstruktur 1 an einer anderen Position, insbesondere in einer anderen Hierarchieebene vorgesehen war, kann wahlweise gelöscht werden, oder nur eine Kopie des Links in die obere Hierarchieebene verschoben werden.

Sollte der Platz, der für die Anzeige dieser Hierarchieebene 12 zur Verfügung steht, nicht ausreichen, so kann beispielsweise die letzte Information der Hierarchieebene 125 nicht mehr angezeigt werden oder diese in die nächste Hierarchieebene 13 verschoben werden. Es ist aber auch möglich, dass die verschobene Information 21 eine der Informationen 121 bis 125 ersetzt.

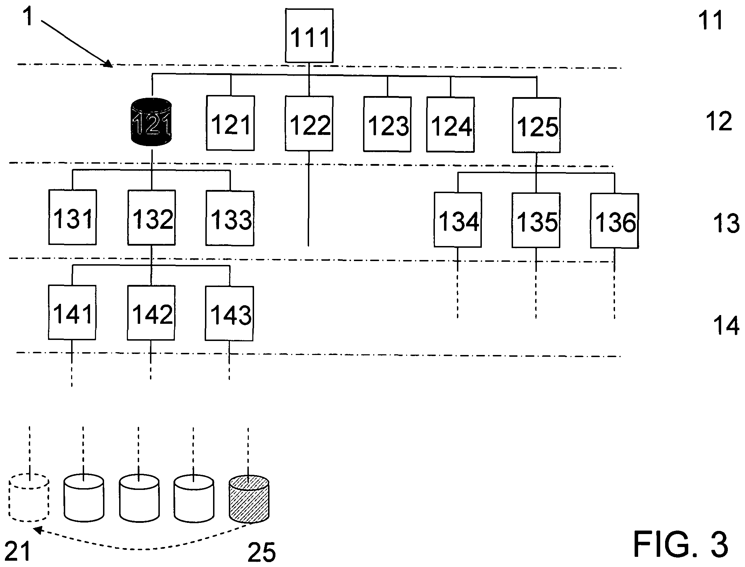

In der Figur 3 ist der erfindungsgemäße Schritt der Assoziation von Informationen angedeutet. Befinden sich in der Datenstruktur 1 eine oder mehrere Informationen, die mit der von dem Benutzer ausgewählten, ersten Information unter einem Oberbegriff zusammengefasst werden kann, so wird diese weitere Information, beziehungsweise die weiteren Informationen, gegebenenfalls in Abhängigkeit der aktuellen Zeit oder weiterer Vorgaben mit der ersten Information assoziiert. In der Figur 3 ist beispielhaft die Datenbank 25 als die Datenbank angedeutet, deren Informationen mit den Informationen der Datenbank 21 assoziiert werden können.

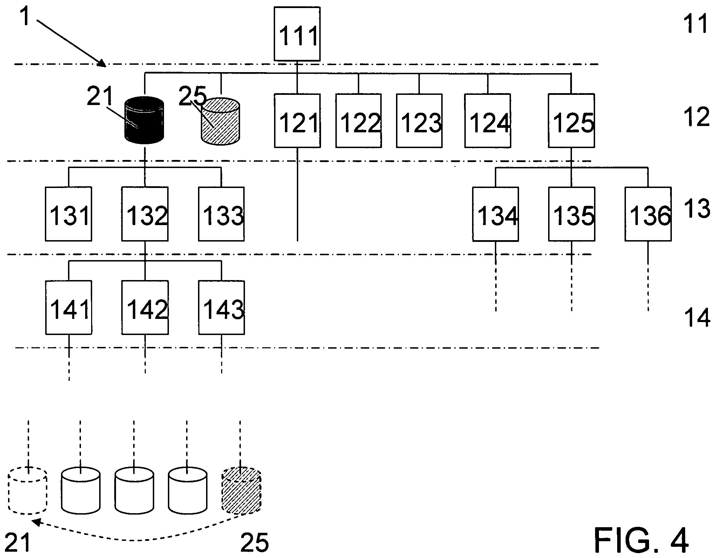

Schließlich ist in Figur 4 der Zustand gezeigt, in dem die assoziierte Information in die Hierarchieebene 12 verschoben worden ist, in der sich die Informationen 21 befinden, die ursprünglich von dem Benutzer ausgewählt wurde. Auf diese Weise wird dem Benutzer bei der nächsten Benutzung der Datenstruktur 1 außer der von ihm zuvor ausgewählten Information 21 auch die damit assoziierte Information 25 angezeigt. Auch hier ist in der Figur 4 die Datenbank 25 in der neuen Position angedeutet, wird aber nicht in diese Position verschoben, sondern es wird ein Zugriff auf die Datenbank 25 von dieser Position aus ermöglicht.

Wird die assoziierte Information, in diesem Fall der Inhalt der Datenbank 25, über einen bestimmten Zeitraum hinweg nicht aktiviert, das heißt ausgewählt, so kann die Verschiebung der Information wieder rückgängig gemacht werden.

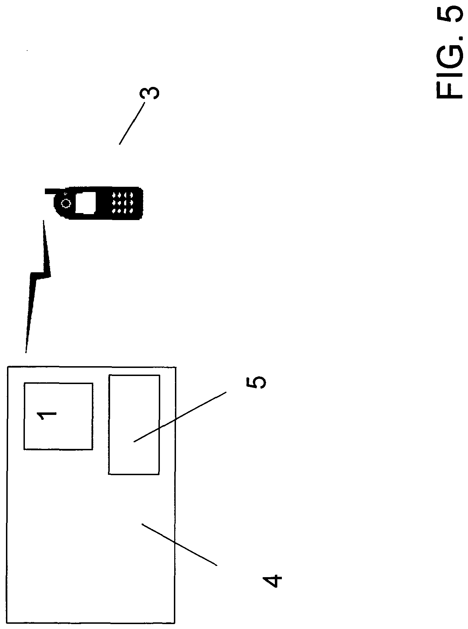

In Figur 5 ist eine Ausführungsform eines erfindungsgemäßen Systems schematisch dargestellt. Das Kommunikationsendgerät 3 ist in der dargestellten Ausführungsform ein Mobiltelefon. Dieses steht über Funkverbindung mit einem Server 4 in Verbindung, auf dem die Datenstruktur abgelegt ist. In der dargestellten Ausführungsform ist auch das Assoziationsmodul 5 in dem Server 4 enthalten. Es liegt aber auch im Rahmen der Erfindung, dass die Datenstruktur 1 in dem Mobiltelefon abgespeichert ist und nur Datenbanken, die von der Datenstruktur 1 aufgerufen werden, auf dem Server 4 liegen oder über den Server 4 Verbindungen zu weiteren Servern (nicht dargestellt) auf denen die entsprechenden Daten abgelegt sind, hergestellt werden. Weiterhin kann auch das Assoziationsmodul 5 auf dem Mobiltelefon 3 selber abgelegt sein.

Die vorliegende Erfindung ist nicht auf die dargestellten Ausführungsformen begrenzt. So ist es erfindungsgemäß auch möglich, dass eine Information mit einer ersten Information assoziiert wird, die nicht, wie in den Figuren 1 und 2, dargestellt, aufgrund des Auswählens durch den Benutzer bereits in eine höhere Hierarchieebene verschoben worden ist. Dies bedeutet, dass die weitere assoziierte Information beispielsweise mit einer Information 131 der dritten Hierarchieebene 13 assoziiert werden kann und aufgrund dieser Assoziation in die dritte Hierarchieebene 13 verschoben werden kann.

Mit der vorliegenden Erfindung wird es möglich ein Service-Angebot beispielsweise eines Mobilfunkbetreibers insoweit zu individualisieren, als es sich für jeden Kunden in Abhängigkeit von seinen Präferenzen anders darstellen kann. Automatisch wird dem Kunden ein entsprechendes individualisiertes Angebot, gegebenenfalls für einen bestimmten Zeitraum oder Zeitpunkt zur Verfügung gestellt beziehungsweise nicht zur Verfügung gestellt, insbesondere wenn keine Relevanz besteht. Einer der Vorteile der Erfindung liegt daher darin, dass eine automatische Präsentation von Werbung ermöglicht wird, die jedoch nur in Abhängigkeit von der Relevanz der möglichen Angebote für den Kunden zu einem bestimmten Zeitpunkt dargestellt wird. Damit kann sowohl die Präsentation sämtlicher im mobilen Portal angebotenen Services sowie deren Nutzung gesteigert werden.

## Patentansprüche

1. Verfahren zur Ausgabe von mindestens einer Information an einer Kommunikationsendvorrichtung (3), wobei die Information (111, 121-143, 21-25) einen Teil einer Datenstruktur (1) darstellt, **dadurch gekennzeichnet, dass** die Datenstruktur (1) einen hierarchischen Aufbau aufweist, dass in Abhängigkeit von mindestens einer Aktion des Benutzers der Kommunikationsendvorrichtung (3) bezüglich einer ersten Information (21), die Teil der Datenstruktur (1) ist und die vom Benutzer ausgewählt wurde, automatisch eine Assoziation zwischen dieser ersten Information (111, 121-143, 21-25) und mindestens einer weiteren Information (111, 121-143, 21-25) der Datenstruktur (1) erzeugt wird, wobei die Assoziation zeitabhängig erzeugt wird, um unterschiedlichen Benutzerverhalten zu unterschiedlichen Zeiten Rechnung zu tragen, die unabhängig von einer vorhergegangenen Aktion des Benutzers bezüglich der weiteren Information ist, wobei mittels der Assoziation die erste Information mit der mindestens einen weiteren Information in Verbindung gebracht wird, wobei das in Verbindung bringen aufgrund mindestens eines Merkmals der ersten Information erfolgt, indem diese erste Information mit wenigstens einer weiteren Information in Verbindung gebracht wird, die ebenfalls dieses Merkmal aufweist, wobei aufgrund der Assoziation die Datenstruktur (1) geändert wird, wobei die Datenstruktur (1) so geändert wird, dass die wenigstens eine weitere Information, die mit der ersten Information assoziiert wurde, aufgrund der Assoziation in die Hierarchieebene der ersten Information gebracht wird, oder die Position der assoziierten Information innerhalb der Hierarchieebene verändert wird, und wobei die Assoziation aufgehoben und die Änderung der Datenstruktur (1) rückgängig gemacht wird, wenn die weitere Information über eine vorgegebene Zeit nicht aktiviert wurde.

2. Verfahren nach Anspruch 1, **dadurch gekennzeichnet, dass** die Ausgabe eine optische Anzeige oder eine akustische Ausgabe darstellt.

3. Verfahren nach einem der Ansprüche 1 oder 2, **dadurch gekennzeichnet, dass** die Assoziation zusätzlich zu der Aktion des Benutzers in Abhängigkeit der Zeit erzeugt wird.

4. Verfahren nach einem der Ansprüche 1 bis 3, **dadurch gekennzeichnet, dass** die Assoziation zusätzlich durch eine Aktion des Benutzers aufgehoben wird.

5. Verfahren nach einem der Ansprüche 1 bis 4, **dadurch gekennzeichnet, dass** die Assoziation zwischen der ersten und mindestens einer weiteren Information (111, 121-143, 21-25) automatisch erfolgt.

6. Verfahren nach einem der Ansprüche 1 bis 5, **dadurch gekennzeichnet, dass** die Informationen Dateien, Bilder, Schriftzüge, Datensätze, Programme und/oder Links darstellen.

7. Verfahren nach einem der Ansprüche 1 bis 6, **dadurch gekennzeichnet, dass** die Aktion des Benutzers bezüglich einer Information (111, 121-143, 21-25) die Bearbeitung, insbesondere das Auswählen, der Information (111, 121-143, 21-25) darstellt.

8. Verfahren nach einem der Ansprüche 1 bis 7, **dadurch gekennzeichnet, dass** die Kommunikationsendvorrichtung (3) ein mobiles oder festes Endgerät darstellt.

9. Verfahren nach einem der Ansprüche 1 bis 8, **dadurch gekennzeichnet, dass** die Kommunikationsendvorrichtung (3) einen Personal Computer (PC), einen Laptop, ein Mobiltelefon oder ein PDA darstellt.

10. Verfahren nach einem der Ansprüche 1 bis 9, **dadurch gekennzeichnet, dass** die Datenstruktur (1) mit mindestens einer Datenbank (21-25) verbunden ist.

11. Verfahren nach einem der Ansprüche 1 bis 10, **dadurch gekennzeichnet, dass** die Kommunikationsendvorrichtung (3) mit einem Netzwerk verbunden ist.

12. System zur Ausgabe von mindestens einer Information, die in einer Datenstruktur, die einen hierarchischen Aufbau aufweist, enthalten ist, wobei das System zumindest eine Kommunikationsendvorrichtung (3) zur Ausgabe von Informationen (111, 121-143, 21-25) und für die Interaktion mit einem Benutzer der Kommunikationsendvorrichtung (3) umfasst, **dadurch gekennzeichnet, dass** das System zumindest ein Assoziationsmodul (5) umfasst, das in Abhängigkeit von mindestens einer Aktion des Benutzers eine erste Information (111, 121-143, 21-25), die Teil der Datenstruktur ist und die vom Benutzer ausgewählt wurde, automatisch mit mindestens einer weiteren Information (111, 121-143, 21-25) assoziiert, wobei mittels der Assoziation die erste Information mit der mindestens einen weiteren Information in Verbindung gebracht wird, wobei das in Verbindung bringen aufgrund mindestens eines Merkmals der ersten Information erfolgt, indem diese erste Information mit wenigstens einer weiteren Information in Verbindung gebracht wird, die ebenfalls dieses Merkmal aufweist, wobei die Assoziation unabhängig von einer vorhergegangenen Aktion des Benutzers bezüglich der weiteren Information ist und zeitabhängig erzeugt wird, um unterschiedlichen Benutzerverhalten zu unterschiedlichen Zeiten Rechnung zu tragen, wobei durch die Assoziation die Datenstruktur (1) so geändert wird, dass die wenigstens eine weitere Information, die mit der ersten Information assoziiert wurde, aufgrund der Assoziation in die Hierarchieebene der ersten Information gebracht wird, oder die Position der assoziierten Information innerhalb der Hierarchieebene verändert wird, und wobei die Assoziation aufgehoben und die Änderung der Datenstruktur (1) rückgängig gemacht wird, wenn die weitere Information über eine vorgegebene Zeit nicht aktiviert wurde.

13. System nach Anspruch 12 **dadurch gekennzeichnet, dass** dieses zum Ausführen zumindest eines der Verfahren gemäß den Ansprüchen 1 bis 11 ausgelegt ist.

## Claims

1. A method for outputting at least one information item at a communication end device (3), whereby the information item (111, 121-143, 21-25) represents a part of a data structure (1), **characterized in that** the data structure (1) has a hierarchical structure, that in dependency of at least one action of the user of said communication end device (3) with regard to a first information item (21), which is part of said data structure (1) and which was selected by the user, an association between this first information item (111, 121-143, 21-25) and at least one further information item (111, 121-143, 21-25) of said data structure (1) is generated automatically, whereby the association is generated dependent on the time, in order to take account of different user behaviours at different times, said association being independent from a previous action of the user with regard to the further information item, whereby by means of the association the first information item is brought in connection with the at least one further information item, whereby the step of bringing in connection is performed by virtue of at least one feature of the first information item, by bringing this first information item in connection with at least one further information, which possesses this feature as well, whereby by virtue of said association the data structure (1) is changed, whereby the data structure (1) is changed such, that the at least one further information item, which was associated with the first information item, is brought into the hierarchical level of said first information item by virtue of said association, or the position of the associated information item is changed within the hierarchical level, and whereby the association is suspended and the change of said data structure (1) is made undone, if the further information item has not been activated over a predefined time.

2. The method according to claim 1, **characterised in that** the output is an optical display or an acoustic output.

3. The method according to anyone of claims 1 or 2, **characterized in that** the association is generated in addition to the action of the user in dependency of the time.

4. The method according to anyone of claims 1 to 3, **characterized in that** the association is additionally suspended by means of an action of the user.

5. The method according to anyone of claims 1 to 4, **characterized in that** the association between the first and at least one further information item (111, 121-143, 21-25) is performed automatically.

6. The method according to anyone of claims 1 to 5, **characterized in that** the information items represent data files, pictures, letterings, data sets, programs and/or links.

7. The method according to anyone of claims 1 to 6, **characterized in that** the action of the user with regard to an information item (111, 121-143, 21-25) represents the processing, in particular the selection, of said information item (111, 121-143, 21-25).

8. The method according to anyone of claims 1 to 7, **characterized in that** the communication end device (3) is a mobile or a fixed terminal.

9. The method according to anyone of claims 1 to 8, **characterized in that** the communication end device (3) is a personal computer (PC), a laptop, a mobile phone or a PDA.

10. The method according to anyone of claims 1 to 9, **characterized in** the data structure (1) is connected to at least one data base (21-25).

11. The method according to anyone of claims 1 to 10, **characterized in that** the communication end device (3) is connected to a network.

12. A system for outputting at least one information item, which is contained in a data structure having a hierarchical structure, whereby the system comprises at least one communication end device (3) for outputting information (11, 121-143, 21-25) and for interacting with a user of said communication end device (3), **characterized in that** the system comprises at least one association module (5),which automatically associates, in dependency on at least one action of the user, a first information item (111, 121-143, 21-25), which is part of the data structure (1) and which was selected by the user, with at least one further information item (111, 121-143, 21-25), whereby, by virtue of said association, the first information item is brought in contact with the at least one further information item, whereby the step of bringing in connection is performed by virtue of at least one feature of the first information item, by bringing this first information item in connection with at least one further information, which possesses this feature as well, whereby the association is independent from a previous action of the user with regard to the further information item and whereby the association is generated dependent on the time, in order to take account of different user behaviours at different times, whereby by virtue of said association the data structure (1) is changed such, that the at least one further information item, which was associated with the first information item, is brought into the hierarchical level of said first information item by virtue of said association, or the position of the associated information item is changed within the hierarchical level, and whereby the association is suspended and the change of said data structure (1) is made undone, if the further information item has not been activated over a predefined time.

13. The system according to claim 12, **characterized in that** it is adapted for performing at least one method according to anyone of claims 1 to 11.

## Revendications

1. Procédé servant à envoyer au moins une information à un terminal de communication (3), dans lequel l'information (111, 121 - 143, 21 - 25) représente une partie d'une structure de données (1), **caractérisé en ce que** la structure de données (1) présente une structure hiérarchique, qu'une association entre la première information (111, 121 - 143, 21 - 25) et au moins une autre information (111, 121 - 143, 21 - 25) de la structure de données (1) est automatiquement générée en fonction d'au moins une action de l'utilisateur du terminal de communication (3) par rapport à une première information (21), qui fait partie de la structure de données (1) et qui a été sélectionnée par l'utilisateur, dans lequel l'association est générée en fonction de l'heure afin de tenir compte de différents comportements d'utilisateur à des heures différentes, qui ne dépend pas d'une action précédente de l'utilisateur par rapport à l'autre information, dans lequel la première information est mise en lien avec l'au moins une autre information au moyen de l'association, dans lequel la mise en lien est effectuée du fait d'au moins une caractéristique de la première information **en ce que** ladite première information est mise en lien avec au moins une autre information, qui présente également ladite caractéristique, dans lequel la structure de données (1) est modifiée du fait de l'association, dans lequel la structure de données (1) est modifiée de sorte que l'au moins une autre information, qui a été associée à la première information, est amenée, du fait de l'association, dans le niveau hiérarchique de la première information ou la position de l'information associée est changée à l'intérieur du niveau hiérarchique, et dans lequel l'association est annulée et la modification de la structure de données (1) est inversée si l'autre information n'a pas été activée sur une période prédéfinie.

2. Procédé selon la revendication 1, **caractérisé en ce que** l'envoi représente un affichage optique ou un envoi acoustique.

3. Procédé selon l'une quelconque des revendications 1 ou 2, **caractérisé en ce que** l'association est générée en fonction de l'heure en plus de l'action de l'utilisateur.

4. Procédé selon l'une quelconque des revendications 1 à 3, **caractérisé en ce que** l'association est supprimée en supplément par une action de l'utilisateur.

5. Procédé selon l'une quelconque des revendications 1 à 4, **caractérisé en ce que** l'association entre la première information et au moins une autre information (111, 121 - 143, 21 - 25) est effectuée automatiquement.

6. Procédé selon l'une quelconque des revendications 1 à 5, **caractérisé en ce que** les informations représentent des fichiers, des images, des inscriptions, des jeux de données, des programmes et/ou des liens.

7. Procédé selon l'une quelconque des revendications 1 à 6, **caractérisé en ce que** l'action de l'utilisateur représente, par rapport à une information (111, 121 - 143, 21 - 25), le traitement, en particulier la sélection, de l'information (111, 121 - 143, 21 - 25).

8. Procédé selon l'une quelconque des revendications 1 à 7, **caractérisé en ce que** le terminal de communication (3) représente un terminal mobile ou fixe.

9. Procédé selon l'une quelconque des revendications 1 à 8, **caractérisé en ce que** le terminal de communication (3) représente un ordinateur personnel (PC), un portable, un téléphone mobile ou un assistant numérique personnel.

10. Procédé selon l'une quelconque des revendications 1 à 9, **caractérisé en ce que** la structure de données (1) est reliée à au moins une base de données (21 - 25).

11. Procédé selon l'une quelconque des revendications 1 à 10, **caractérisé en ce que** le terminal de communication (3) est relié à un réseau.

12. Système servant à envoyer au moins une information, qui est contenue dans une structure de données, qui présente une structure hiérarchique, dans lequel le système comprend au moins un terminal de communication (3) servant à envoyer des informations (111, 121 - 143, 21 - 25) et en vue de l'interaction avec un utilisateur du terminal de communication (3), **caractérisé en ce que** le système comprend au moins un module d'association (5), qui associe, en fonction d'au moins une action de l'utilisateur, une première information (111, 121 - 143, 21 - 25), qui fait partie de la structure de données et qui a été sélectionnée par l'utilisateur, automatiquement à au moins une autre information (111, 121 - 143, 21 - 25), dans lequel la première information est amenée en lien avec l'au moins une autre information au moyen de l'association, dans lequel la mise en lien est effectuée du fait d'au moins une caractéristique de la première information **en ce que** ladite première information est mise en lien avec au moins une autre information, qui présente également ladite caractéristique, dans lequel l'association est indépendante d'une action précédente de l'utilisateur par rapport à l'autre information et est générée en fonction de l'heure afin de tenir compte de différents comportements d'utilisateur à des heures différentes, dans lequel la structure de données (1) est modifiée du fait de l'association de sorte que l'au moins une autre information, qui a été associée à la première information, est amenée, du fait de l'association, dans le niveau hiérarchique de la première information ou la position de l'information associée est changée à l'intérieur du niveau hiérarchique, et dans lequel l'association est annulée et la modification de la structure de données (1) est inversée si l'autre information n'a pas été activée sur une période prédéfinie.

13. Système selon la revendication 12, **caractérisé en ce que** ledit système est configuré afin d'exécuter au moins un des procédés selon les revendications 1 à 11.
